# EUROPEAN PATENT APPLICATION

(11) **EP 4 410 092 A1**
(43) Date of publication of application: **07.08.2024**
(21) Application number: 23839556.0
(22) Date of filing: 06.07.2023
(51) Int. Cl.: A01G 9/02

(54) **PLANT POT**

(30) Priority: 13.07.2022 JP 2022112319
(71) Applicant: Ansin Co., Ltd., Okazaki-shi, Aichi 444-0039 (JP)
(72) Inventor: SUGITA Kikuo, Okazaki-shi, Aichi 444-0039 (JP)
(74) Representative: Kramer Barske Schmidtchen Patentanwälte PartG mbB
(86) International application number: PCT/JP2023/025076
(87) International publication number: WO 2024/014384

(57) **Abstract**

A plant pot (1) includes ventilation holes (4) as a ventilation portion in a side surface (2). The ventilation hole (4) has a first opening (41) that opens toward the outside of the plant pot (1) and a second opening (42) that opens toward the inside of the plant pot (1). An opening area (S1) of the first opening (41) is larger than an opening area (S2) of the second opening (42). The ventilation hole (4) may include a tapered portion (43) that narrows from the first opening (41) toward the second opening (42). According to the plant pot (1), air outside the plant pot can be efficiently taken into the plant pot (1).

## Description

### CROSS-REFERENCE TO RELATED APPLICATIONS

The present application is based on Japanese Patent Application No. 2022-112319 filed on July 13, 2022, the contents of which are incorporated herein by reference.

### TECHNICAL FIELD

The present disclosure relates to a plant pot.

### BACKGROUND ART

Conventionally, in growing plants using a plant pot, a technique of the plant pot having improved drainage and air permeability for preventing root rot is known. For example, Patent Literature 1 discloses a plant pot provided with a hole for ventilation on a side surface.

### PRIOR ART LITERATURE

### PATENT LITERATURE

Patent Literature 1: JP S61-100963 U

### SUMMARY OF INVENTION

The plant pot of Patent Literature 1 has cylindrical holes, that is, has constant and straight cross-sectional shapes, and thus has a problem that air outside the plant pot cannot be efficiently taken into the plant pot.

An object of the present disclosure is to provide a plant pot capable of improving air permeability.

One aspect of the present disclosure is
in a plant pot, wherein
a ventilation portion is provided in a side surface,
the ventilation portion has a first opening opened toward an outside of the plant pot and a second opening opened toward an inside of the plant pot, and
an opening area of the first opening is larger than an opening area of the second opening.

The plant pot of the present disclosure includes a ventilation portion in a side surface, and an opening area of a first opening of the ventilation portion is formed to be larger than an opening area of a second opening of the ventilation portion, so that the air outside the plant pot can be efficiently taken into the plant pot.

### BRIEF DESCRIPTION OF THE DRAWINGS

FIG. 1 is a schematic view of a plant pot according to Embodiment 1.
FIG. 2(a) is a plan view and FIG. 2(b) is a side view of the plant pot according to Embodiment 1.
FIG. 3(a) is a cross-sectional view taken along the line B-B and FIG. 3(b) is a cross-sectional view taken along line A-A of the plant pot according to Embodiment 1.
FIGS. 4 are enlarged cross-sectional schematic views taken along line A-A of a main part C showing an inclined state of a ventilation hole in the plant pot according to Embodiment 1.
FIG. 5 is a schematic view showing an action of a ventilation portion in the plant pot according to Embodiment 1.
FIGS. 6 are side views of a plant pot according to a modification, and FIG. 6(a) is a side view of a plant pot according to Embodiment 2, FIG. 6(b) is a side view of a plant pot according to Embodiment 3, and FIG. 6(c) is a side view of a plant pot according to Embodiment 4.
FIGS. 7 are enlarged cross-sectional schematic views taken along line A-A of a main part C showing a shape of a ventilation hole in a plant pot according to Embodiment 5.
FIG. 8(a) is a side view and FIG. 8(b) is a cross-sectional view taken along line A-A of a plant pot according to Embodiment 6.
FIGS. 9 are schematic views showing variations of recesses in the plant pot according to Embodiment 6.
FIG. 10 is a cross-sectional view of a plant pot according to Embodiment 7.
FIG. 11(a) is a cross-sectional view of a modification of the plant pot according to Embodiment 7, and FIG. 11(b) is a cross-sectional view of another modification of the plant pot according to Embodiment 7.
FIG. 12(a) is a cross-sectional view of a plant pot according to Comparative Embodiment 1, and FIG. 12(b) is a cross-sectional view of a plant pot according to Comparative Embodiment 2.

### MODE FOR CARRYING OUT INVENTION

### [Description of Embodiments of Present Disclosure]

First, embodiments of the present disclosure will be listed and described.

A plant pot of the present disclosure includes:
a ventilation portion provided in a side surface, wherein
the ventilation portion has a first opening opened toward an outside of the plant pot and a second opening opened toward an inside of the plant pot, and an opening area of the first opening is larger than an opening area of the second opening.

In the plant pot of the present disclosure, the ventilation portion may be at least one of ventilation holes penetrating the side surface and slits formed in the side surface.

In the plant pot of the present disclosure, the ventilation hole may include a tapered portion that narrows from the first opening toward the second opening. The ventilation hole may further include a cylindrical portion having a diameter equal to that of the second opening.

In the plant pot of the present disclosure, the slit may be formed in a triangular shape expanding toward the bottom surface of the plant pot.

In the plant pot of the present disclosure, the slit may be formed such that the slit width decreases from the outside to the inside of the side surface.

The plant pot of the present disclosure may include a recess on the outer surface of the side surface, and the recess may be formed from the edge of the first opening toward the bottom surface of the plant pot.

In the plant pot of the present disclosure, the side surface may be bulged outward, and the inner surface of the side surface may be formed in a tapered shape that narrows from the upper opening of the plant pot toward the bottom surface of the plant pot.

Hereinafter, a plant pot according to embodiments embodying the plant pot of the present disclosure will be described in detail with reference to the drawings. Note that the plant pot of the present disclosure is not limited by the following examples.

### (Embodiment 1)

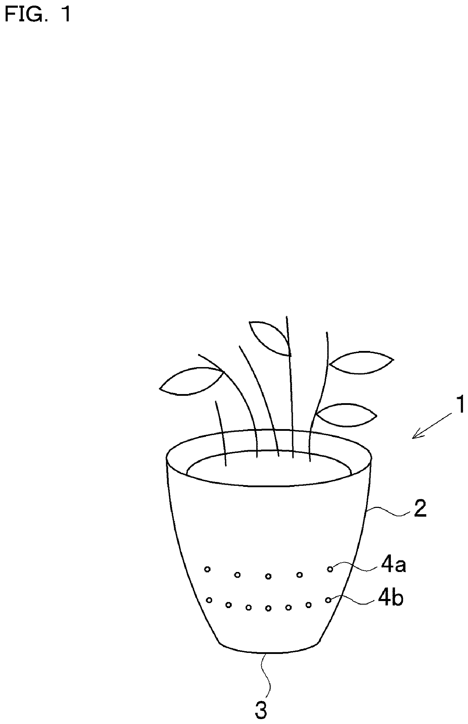

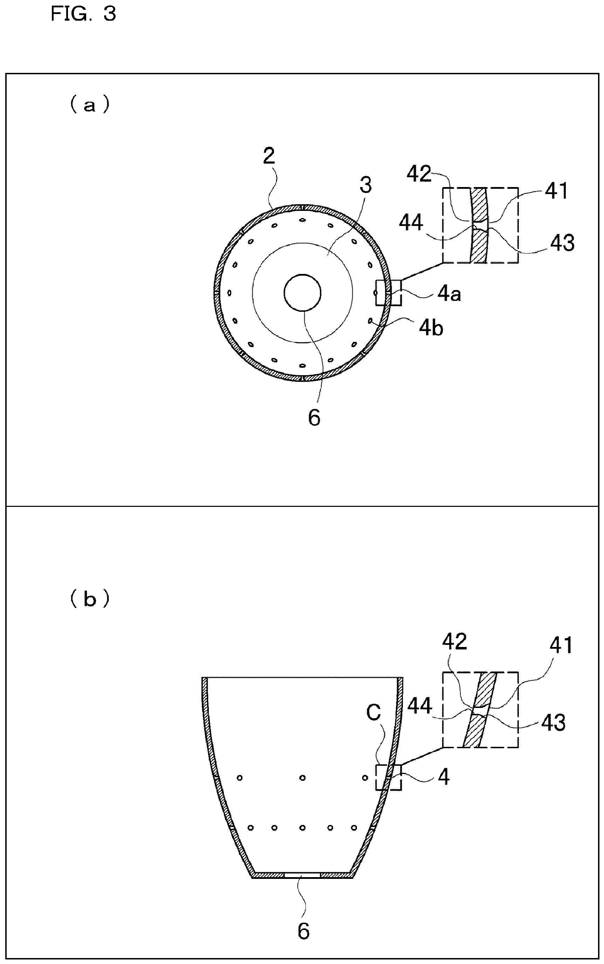

A plant pot of Embodiment 1 will be described with reference to FIGS. 1 to 5. As illustrated in FIGS. 1 to 5, a plant pot 1 of Embodiment 1 has a side surface 2 and a bottom surface 3. The side surface 2 is provided so as to rise upward from the outer peripheral edge of the bottom surface 3. The bottom surface 3 is provided with a drain hole 6 for draining water that has fallen to the bottom surface 3.

As illustrated in FIGS. 1 to 5, the side surface 2 includes a ventilation portion. The ventilation portion allows a space outside the plant pot 1 and a space inside the plant pot 1 to communicate with each other in a breathable manner. The ventilation portion can be provided to penetrate the side surface 2, for example.

In Embodiment 1, the ventilation portion is specifically configured of ventilation holes 4 (4a, 4b) penetrating the side surface 2. Specifically, FIGS. 1 to 5 illustrate an example in which a plurality of ventilation holes 4 (4a, 4b) are provided in the circumferential direction of the side surface 2. The plurality of ventilation holes 4 can be formed in the circumferential direction of the side surface 2 at a plurality of height positions having different heights from the bottom surface 3 when the bottom surface 3 is set as a reference height position. In FIGS. 1 to 5, more specifically, the plurality of ventilation holes 4 include a plurality of first ventilation holes 4a formed in the circumferential direction of the side surface 2 at predetermined height positions from the bottom surface 3 and a plurality of second ventilation holes 4b formed in the circumferential direction of the side surface 2 at predetermined height positions closer to the bottom surface 3 than the predetermined height positions at which the plurality of first ventilation holes 4a are formed, when the bottom surface 3 is set to the reference height position. Although FIGS. 1 to 5 illustrate an example in which the plurality of ventilation holes 4 are arranged so as to be in a plurality of stages, the plurality of ventilation holes 4 may be arranged in the circumferential direction of the side surface 2 so as to be in one stage.

When the plurality of ventilation holes 4 are formed in the circumferential direction of the side surface 2 at a plurality of height positions having different heights from the bottom surface 3, the number of ventilation holes 4 in the circumferential direction of the side surface 2 can be configured to increase toward the bottom surface 3. FIGS. 1 to 5 illustrate an example in which the number of second ventilation holes 4b arranged in the circumferential direction of the side surface 2 at a position closer to the bottom surface 3 than the first ventilation hole 4a is larger than the number of first ventilation holes 4a arranged in the circumferential direction of the side surface 2 at a position far from the bottom surface 3 than the second ventilation hole 4b. According to these configurations, since the number of the ventilation holes 4 close to the bottom surface 3 is larger than the number of the ventilation holes 4 far from the bottom surface 3, the air permeability can be improved toward the bottom surface 3.

The ventilation hole 4 as a ventilation portion has a first opening 41 that opens toward the outside of the plant pot 1 and a second opening 42 that opens toward the inside of the plant pot 1. That is, it can be said that the ventilation hole 4 as the ventilation portion has the first opening 41 opened on the outer surface of the side surface 2 and the second opening 42 opened on the inner surface of the side surface 2. An opening area S1 of the first opening 41 is formed to be larger than an opening area S2 of the second opening 42.

The plant pot 1 of Embodiment 1 includes the ventilation hole 4 as the ventilation portion in the side surface 2, and the opening area of the first opening 41 of the ventilation hole 4 is formed to be larger than the opening area of the second opening 42 of the ventilation hole 4, so that the air outside the plant pot 1 can be efficiently taken into the plant pot 1.

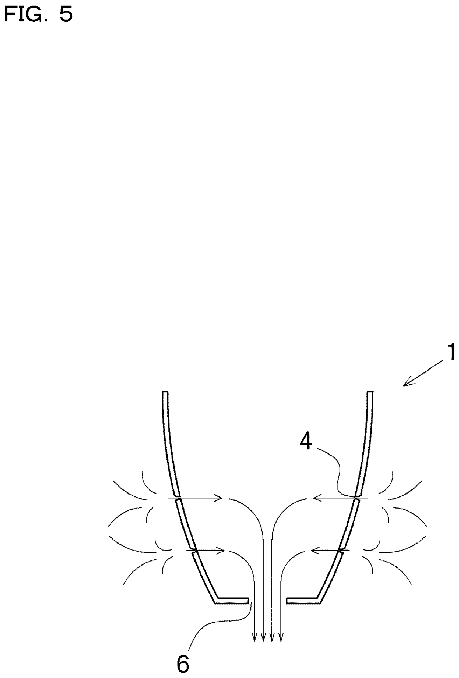

In the plant pot 1 of Embodiment 1, the ventilation hole 4 may be configured to include a tapered portion 43 that narrows from the first opening 41 toward the second opening 42. According to this configuration, as illustrated in FIG. 5, the air outside the plant pot 1 can be collected to strengthen the air flow, and the air can be efficiently sent into the plant pot 1. The sent air absorbs moisture of soil inside the plant pot 1 and is discharged to the outside of the plant pot 1 through the drain hole 6 and the like.

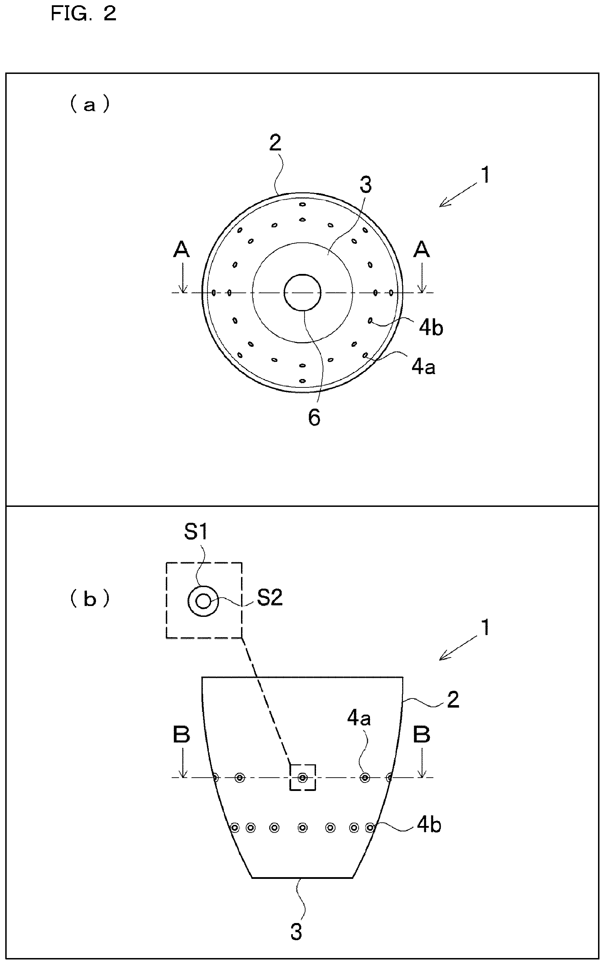

In this case, it is preferable that the ventilation hole 4 further includes a cylindrical portion 44 having a diameter equal to a diameter of the second opening 42. According to this configuration, the air flow strengthened by the tapered portion 43 can be more efficiently sent into the inside of the plant pot 1 through the cylindrical portion 44. The tapered portion 43 is provided on the first opening 41 side, and the cylindrical portion 44 is provided on the second opening 42 side. A tapered end of the tapered portion 43 communicates with an end of the cylindrical portion 44 on the first opening 41 side. FIGS. 2 to 5 illustrate an example in which the ventilation hole 4 is formed in a funnel shape as a whole in a cross-sectional view along the thickness direction of the side surface 2.

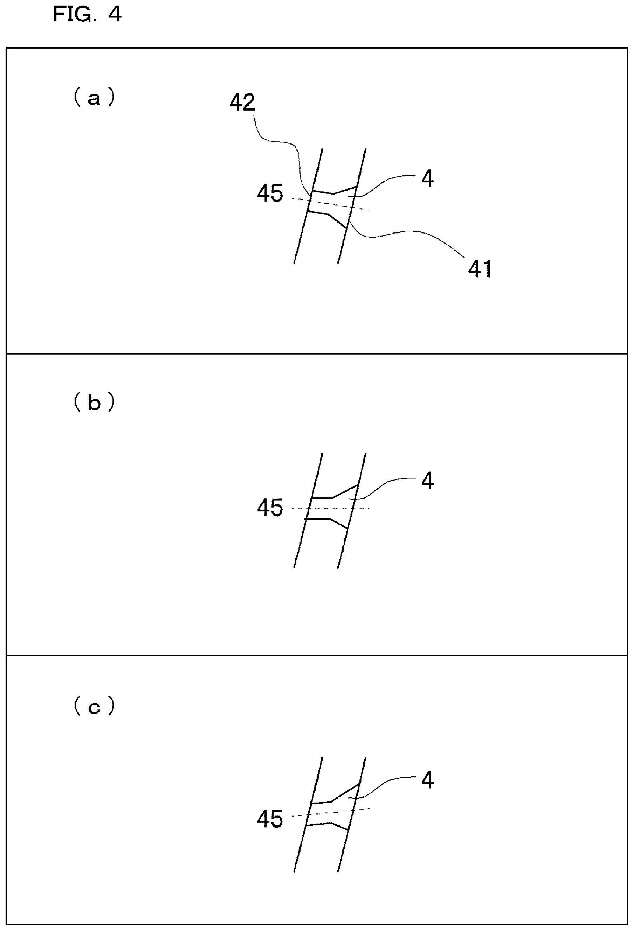

In the plant pot 1 of Embodiment 1, a central axis 45 of the ventilation hole 4 can be formed so as to rise toward the inside of the plant pot 1 as illustrated in FIG. 4(a). According to this configuration, for example, when the installation place of the plant pot 1 is near the ceiling of a room (high position) or the like, the rising air flow is easily taken in. In addition, the central axis 45 of the ventilation hole 4 can be formed to be horizontal as illustrated in FIG. 4(b). According to this configuration, for example, when the installation place of the plant pot 1 is in the vicinity of the middle between the ceiling and the floor (middle position) or the like, the horizontal air flow is easily taken in. Further, as illustrated in FIG. 4(c), the central axis 45 of the ventilation hole 4 can be formed so as to descend toward the inside of the plant pot 1. According to this configuration, for example, when the installation place of the plant pot 1 is near the floor (low position) or the like, it is easy to take in the descending air flow.

### (Embodiment 2)

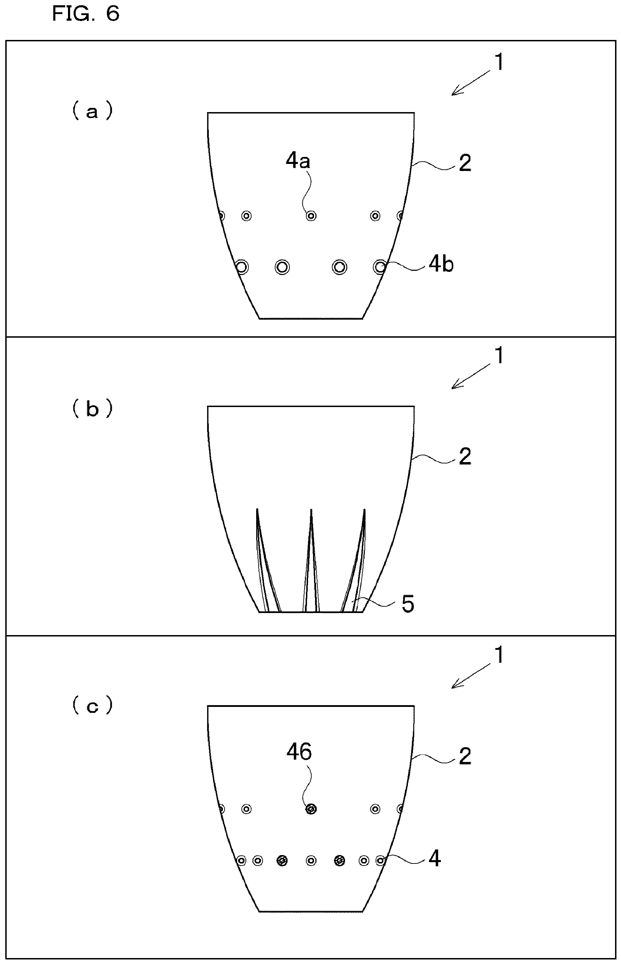

A plant pot of Embodiment 2 will be described with reference to FIG. 6(a). Note that, among the reference numerals used in Embodiment 2 and subsequent embodiments, the same reference numerals as those used in the above-described embodiments represent the same components and the like as those in the above-described embodiments unless otherwise specified.

The plant pot 1 of Embodiment 1 described above shows an example in which the ventilation portion is constituted by the plurality of ventilation holes 4 having the same size. On the other hand, as illustrated in FIG. 6(a), the plant pot 1 of Embodiment 2 is an example in which the ventilation portion is constituted by a plurality of ventilation holes 4 having different sizes. As described above, the plurality of ventilation holes 4 do not necessarily have the same size, and even if the ventilation holes 4 have different sizes, the air outside the plant pot 1 can be efficiently taken into the inside of the plant pot 1.

In the plant pot 1 of Embodiment 2, when the plurality of ventilation holes 4 are formed in the circumferential direction of the side surface 2 at a plurality of height positions having different heights from the bottom surface 3, the sizes of the ventilation holes 4 in the circumferential direction of the side surface 2 can be configured to increase toward the bottom surface 3. FIG. 6(a) illustrates an example in which the size of the second ventilation hole 4b arranged in the circumferential direction of the side surface 2 at a position closer to the bottom surface 3 than the first ventilation hole 4a is formed to be larger than the size of the first ventilation hole 4a arranged in the circumferential direction of the side surface 2 at a position far from the bottom surface 3 than the second ventilation hole 4b. According to these configurations, since the size of the ventilation hole 4 close to the bottom surface 3 is formed to be larger than the size of the ventilation hole 4 far from the bottom surface 3, the air permeability can be improved toward the bottom surface 3. As a method of making the size of the second ventilation hole 4b larger than the size of the first ventilation hole 4a, for example, the cross-sectional area or the outer shape of the second ventilation hole 4b can be made larger than the cross-sectional area or the outer shape of the first ventilation hole 4a in the cross-sectional view along the thickness direction of the side surface 2.

Other configurations and operational effects are the same as those of Embodiment 1, and descriptions of a plant pot of other embodiments can also be appropriately referred to.

### (Embodiment 3)

A plant pot of Embodiment 3 will be described with reference to FIG. 6(b).

In the plant pot 1 of Embodiment 1 and Embodiment 2 described above, an example in which the ventilation portion is constituted by the ventilation holes 4 penetrating the side surface 2 is shown. On the other hand, as illustrated in FIG. 6(b), the plant pot 1 of Embodiment 3 is an example in which the ventilation portion is constituted by the slits 5 formed in the side surface 2. FIG. 6(b) specifically illustrates an example in which a plurality of slits 5 are formed in the circumferential direction of the side surface 2.

The slit 5 as the ventilation portion has the first opening opened toward the outside of the plant pot 1 and the second opening opened toward the inside of the plant pot 1. That is, it can be said that the slit 5 as the ventilation portion has the first opening opened on the outer surface of the side surface 2 and the second opening opened on the inner surface of the side surface 2. The opening area of the first opening is formed to be larger than the opening area of the second opening.

As described above, the form of the ventilation portion is not necessarily limited to the ventilation hole 4, and even in the slit 5, the air outside the plant pot 1 can be efficiently taken into the inside of the plant pot 1.

In the plant pot 1 of Embodiment 3, the slit 5 may be formed in a triangular shape expanding toward the bottom surface 3 of the plant pot 1. The shape of the slit 5 is determined when viewed from the outside of the plant pot 1. According to the above configuration, the air permeability can be improved toward the bottom surface 3.

In the plant pot 1 of Embodiment 3, the slit 5 may be formed such that the slit width decreases from the outside to the inside of the side surface 2. According to this configuration, the air outside the plant pot 1 can be collected to strengthen the air flow, and the air can be efficiently sent into the plant pot 1.

Other configurations and operational effects are the same as those of Embodiment 1, and descriptions of a plant pot of other embodiments can also be appropriately referred to.

### (Embodiment 4)

A plant pot of Embodiment 4 will be described with reference to FIG. 6(c).

In the plant pot 1 of Embodiment 4, a part of a plurality of ventilation holes 4 is closed with kintsugi 46, and the ventilation holes 4 are used as decoration of the plant pot 1. That is, it can be said that the plant pot 1 of Embodiment 4 has the kintsugi 46 that closes some of the plurality of ventilation holes 4. According to the above configuration, it is possible to improve the design property of the plant pot 1 itself while ensuring the air permeability suitable for the installation place of the plant pot 1.

Although not illustrated, it is also possible to close some of the plurality of slits 5 illustrated in Embodiment 3 with the kintsugi 46.

Other configurations and operational effects are the same as those of Embodiment 1, and descriptions of a plant pot of other embodiments can also be appropriately referred to.

### (Embodiment 5)

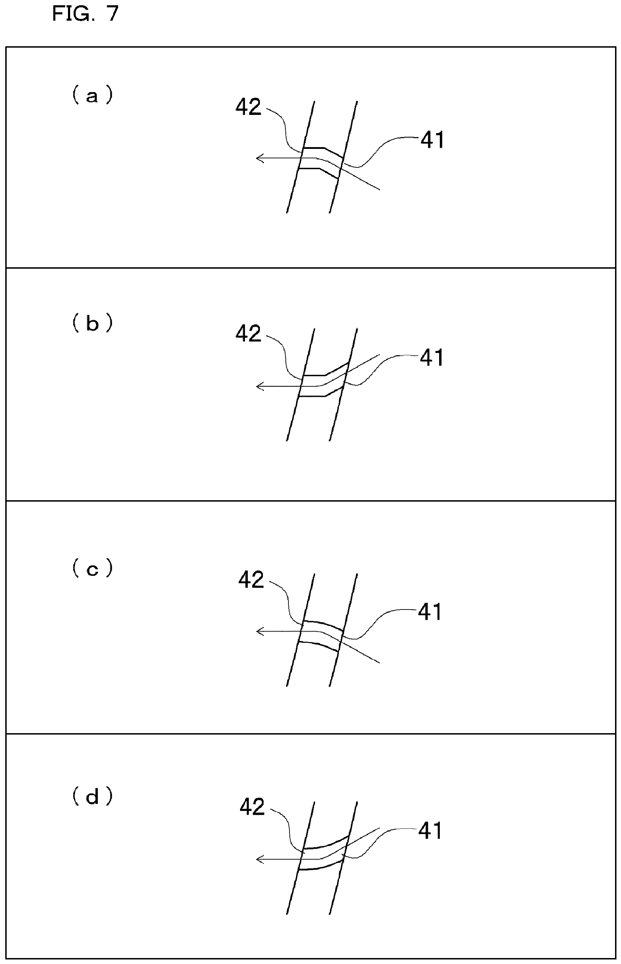

A plant pot of Embodiment 5 will be described with reference to FIGS. 7.

In the plant pot 1 of Embodiment 1 and Embodiment 2 described above, an example is shown in which the ventilation hole 4 as the ventilation portion is constituted such that there is no bent portion between the first opening 41 and the second opening 42. On the other hand, as illustrated in FIGS. 7, the plant pot 1 of Embodiment 5 is an example in which there is a portion bent into the ventilation hole 4 between the first opening 41 and the second opening 42.

FIGS. 7(a) and 7(b) illustrate an example in which the ventilation hole 4 as the ventilation portion is provided in a bent state having a bent portion. FIGS. 7(c) and 7(d) illustrate an example in which the ventilation hole 4 as the ventilation portion does not have a clear bent portion and is provided in a curved state. According to such a configuration, the air taken in from the outside of the plant pot 1 can be guided in a desired direction inside the plant pot 1.

For example, when the installation place of the plant pot 1 is near the ceiling of a room (high position) or the like, the air flow can be horizontally guided after taking in the rising air flow by using the ventilation hole 4 as illustrated in FIGS. 7(a) and 7(c). In addition, for example, when the installation place of the plant pot 1 is near the floor of a room (low position) or the like, the air flow can be horizontally guided after taking in the descending air flow by using the ventilation hole 4 as illustrated in FIGS. 7(b) and 7(d). As described above, according to the plant pot 1 of Embodiment 5, the air permeability can be finely adjusted according to the kind of the plant to be cultivated and the installation place.

In FIGS. 7, for the sake of simplification of the drawing, the opening area S1 of the first opening 41 opened on the outer side of the plant pot 1 and the opening area S2 of the second opening 42 opened on the inner side of the plant pot 1 are drawn to be equal to each other, but also in Embodiment 5, the opening area S1 of the first opening 41 is formed to be larger than the opening area S2 of the second opening 42.

Other configurations and operational effects are the same as those of Embodiment 1, and descriptions of a plant pot of other embodiments can also be appropriately referred to.

### (Embodiment 6)

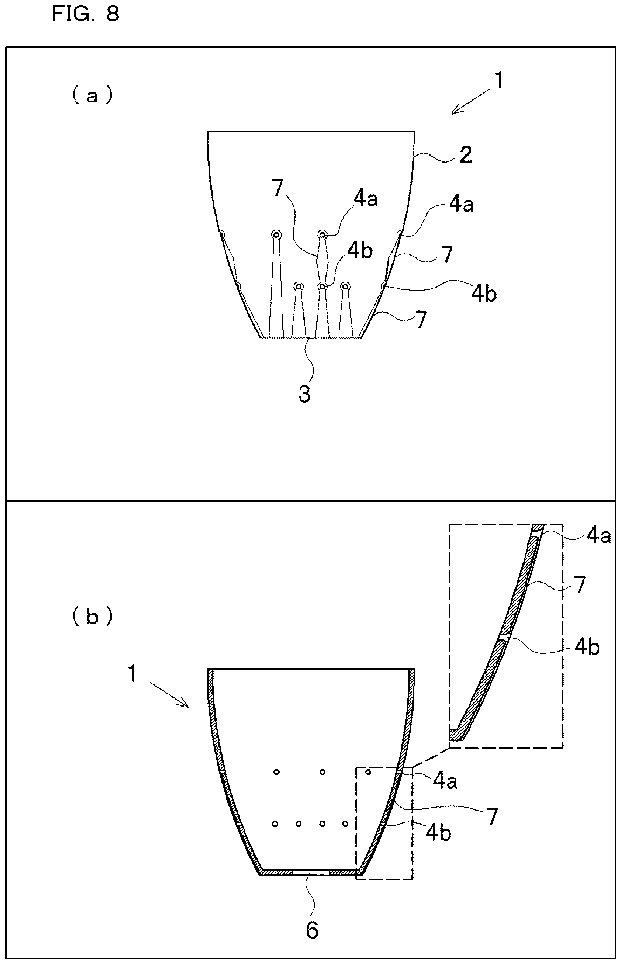

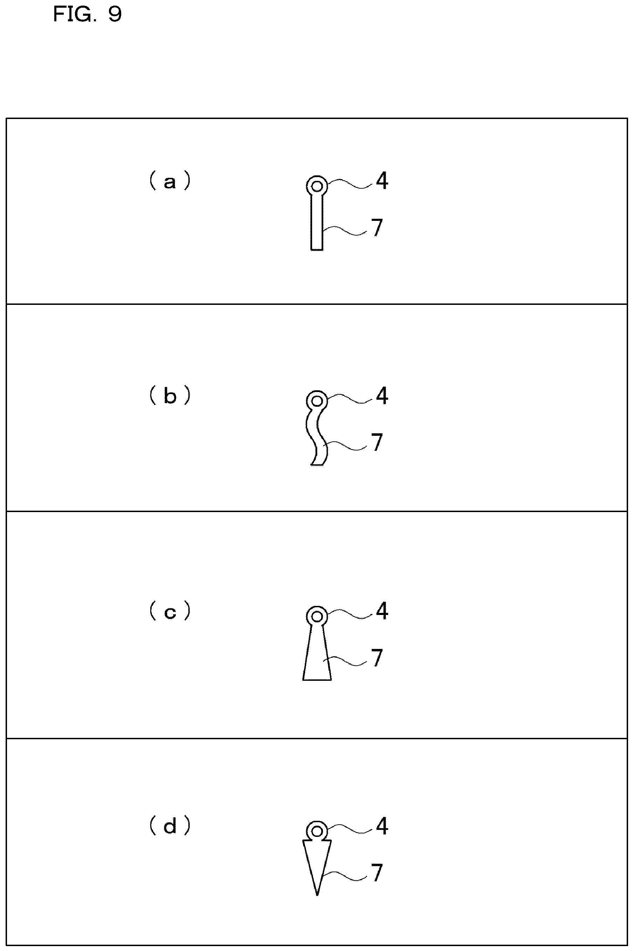

A plant pot of Embodiment 6 will be described with reference to FIGS. 8 and 9.

A plant pot 1 of Embodiment 6 includes a recess 7 on an outer surface of the side surface 2. It can also be said that the recess 7 is formed in a groove shape with a predetermined shape on the outer surface of the side surface 2. The recess 7 is formed from the edge of the first opening 41 toward the bottom 3 of the plant pot 1. FIGS. 8 illustrate an example in which the recess 7 extends from the edge of the first opening 41 to the lower end of the side surface 2, or extends from the edge of the predetermined first opening 41 to the edge of another predetermined first opening 41 closer to the bottom surface 3 side (downward) than the first opening 41.

In a conventional plant pot, there is a problem that while watering is repeated, calcification marks and pigmentation occur on the surface of the plant pot due to a water component and a soil component flowing out from the holes, and the appearance of the plant pot is deteriorated. On the other hand, in the plant pot 1 of Embodiment 6, the water component and the soil component flowing out from the first opening 41 are guided to the recess 7, and calcification marks and pigmentation occur according to the shape of the recess 7. Therefore, according to the plant pot 1 of Embodiment 6, calcification marks and pigmentation can be used as the design of the plant pot 1, and deterioration of the appearance of the plant pot 1 can be prevented.

FIGS. 8 illustrate an example in which the recess 7 is formed in a triangular shape or a rhombic shape extending from the first opening 41 when viewed from the outside of the side surface 2. The recess 7 preferably includes a recess formed to extend to the lower end of the side surface 2 so as not to overflow the water component and the soil component. When the ventilation hole 4b is provided below the ventilation hole 4a, it is preferable to connect the recess 7 having the first opening 41 of the ventilation hole 4a as a base end to the upper edge of the first opening 41 of the ventilation hole 4b.

As illustrated in FIGS. 9, the recess 7 can be formed in various shapes. Specifically, the recess 7 can be formed in a shape extending from the first opening 41 in a band shape (FIG. 9(a)), a shape extending from the first opening 41 while being curved in a band shape (FIG. 9(b)), a triangular shape extending from the first opening 41 (FIG. 9(c)), an inverted triangular shape narrowing from the first opening 41 (FIG. 9(d)), or the like. In addition, one plant pot 1 can be constituted to include recesses 7 having a plurality of different shapes, or can be configured to include recesses 7 having a plurality of different lengths, widths, and depths.

Other configurations and operational effects are the same as those of Embodiment 1, and descriptions of a plant pot of other embodiments can also be appropriately referred to.

### (Embodiment 7)

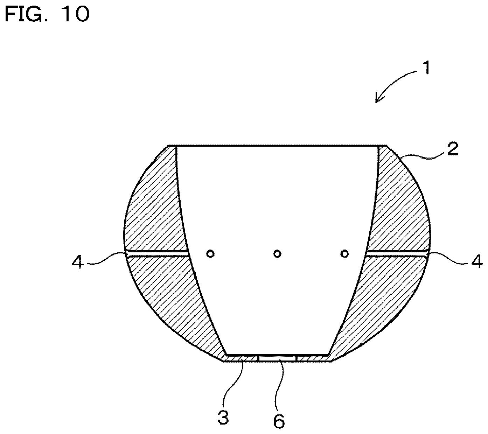

A plant pot of Embodiment 7 will be described with reference to FIGS. 10 to 12.

As exemplified in FIG. 10, in the plant pot 1 of Embodiment 7, the side surface 2 is bulged outward, and the inner surface of the side surface 2 is formed in a tapered shape that narrows from the upper opening of the plant pot 1 toward the bottom surface 3 of the plant pot 1.

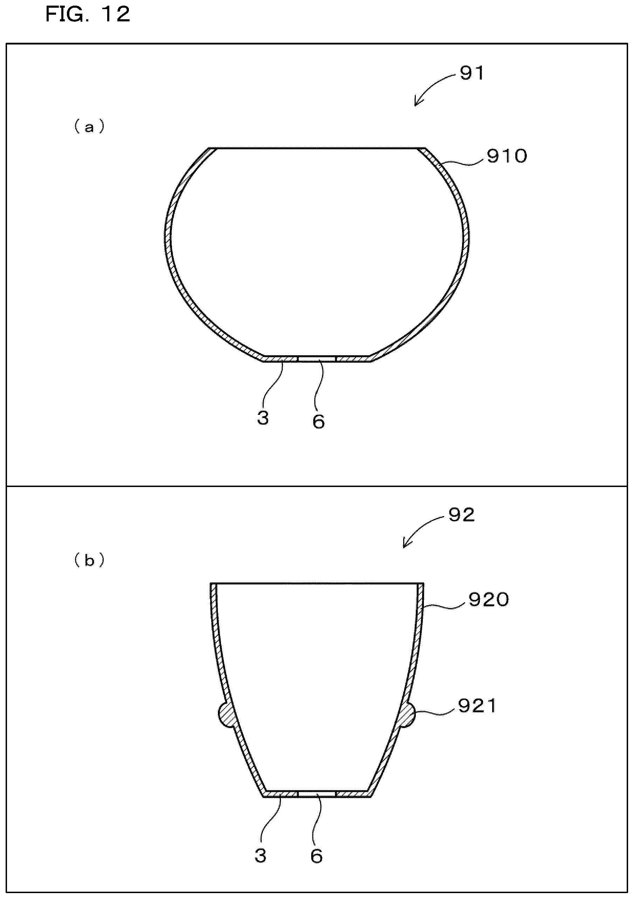

As illustrated in FIG. 12(a), in a conventional plant pot 91 according to Comparative Embodiment 1, a side surface 910 is bulged outward, but the inner surface of the side surface 910 is also formed bulging outward. As described above, the inner surface of the side surface 910 is usually formed along the outer surface of the side surface 910. This is because, for example, in a molding method such as wheel molding, the wall thickness of the side surface 910 is generally constant. Such a plant pot 91 of Comparative Embodiment 1 has a problem that soil with roots of plants is caught on the inner surface of the side surface 910 at the time of transplanting plants and damages the roots of plants.

On the other hand, in the plant pot 1 of Embodiment 7, since the soil with the roots of the plants is not caught on the inner surface of the side surface 2 by adopting the above configuration, the plants can be transplanted without damaging the roots of the plants.

In addition, according to the plant pot 1 of Embodiment 7, the thickness of the side surface 2 is increased between the outer surface of the side surface 2 bulging outward and the tapered inner surface that narrows toward the bottom surface 3, the weight of the plant pot 1 is increased, and the stability of the plant pot 1 is improved. Therefore, according to the plant pot 1 of Embodiment 7, for example, even when a plant having a relatively large weight on the plant pot, such as a tuberous root plant or a suck plant, is grown, the plant can be grown while suppressing collapse of the plant pot 1.

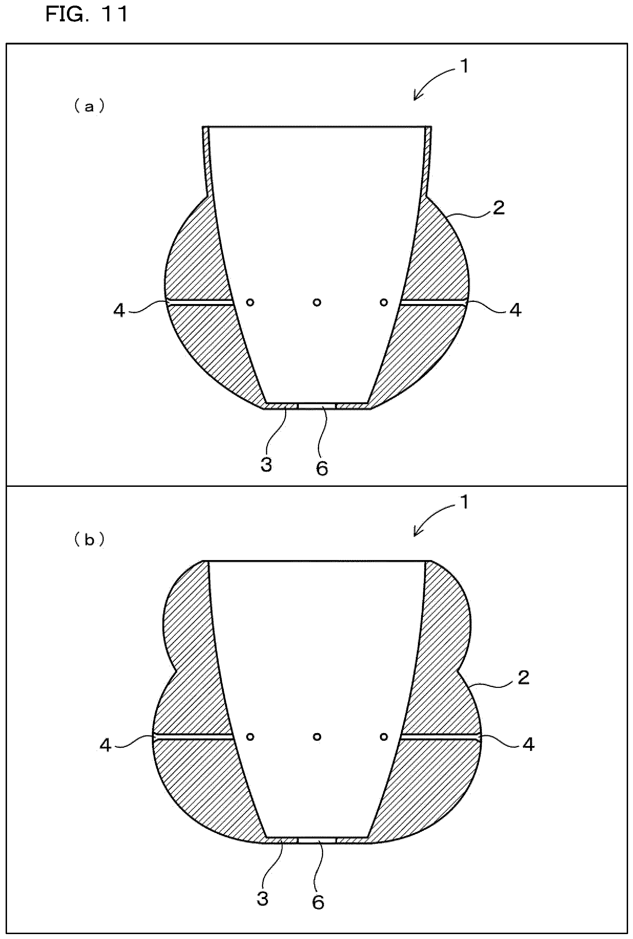

Note that, although FIG. 10 illustrates an example in which the entire side surface 2 bulges outward, as illustrated in FIG. 11(a), there may be a portion that does not bulge outward in a part of the side surface 2. In addition, as illustrated in FIG. 11(b), the side surface 2 may bulge outward in a step shape. Here, as illustrated in FIG. 12(b), in a plant pot 92 of Comparative Embodiment 2, since a protrusion 921 protrudes from the outer surface of a side surface 920 having a certain wall thickness, it cannot be said that the side surface 2 bulges outward. Whether or not the side surface 2 bulges outward can be determined from a cross section along the vertical direction of the plant pot 1.

Other configurations and operational effects are the same as those of Embodiment 1, and descriptions of a plant pot of other embodiments can also be appropriately referred to.

The present disclosure is not limited to the above embodiments, and can be implemented by appropriately changing the shape and configuration of each unit without departing from the gist of the present disclosure. In addition, the configurations illustrated in the above embodiments can be arbitrarily combined.

## Claims

1. A plant pot comprising:
a ventilation portion provided in a side surface, wherein
the ventilation portion has a first opening opened toward an outside of the plant pot and a second opening opened toward an inside of the plant pot, and
an opening area of the first opening is larger than an opening area of the second opening.

2. The plant pot according to claim 1, wherein
the ventilation portion is at least one of a ventilation hole penetrating the side surface and a slit formed in the side surface.

3. The plant pot according to claim 2, wherein
the ventilation hole comprises a tapered portion that narrows from the first opening toward the second opening.

4. The plant pot according to claim 2 or 3, wherein
the ventilation hole further comprises a cylindrical portion having a diameter equal to a diameter of the second opening.

5. The plant pot according to claim 2, wherein
the slit is formed in a triangular shape expanding toward a bottom surface of the plant pot.

6. The plant pot according to claim 2 or 5, wherein
the slit is formed such that a slit width decreases from outside to inside of the side surface.

7. The plant pot according to claim 1 or 2, wherein
a recess is provided on an outer surface of the side surface, and
the recess is formed from an edge of the first opening toward a bottom surface of the plant pot.

8. The plant pot according to claim 1 or 2, wherein
the side surface bulges outward, and
an inner surface of the side surface is formed in a tapered shape that narrows from an upper opening of the plant pot toward a bottom surface of the plant pot.
